Europäisches Patentamt

European Patent Office

Office européen des brevets

(11) Publication number: **0 074 343
B1**

(12) **EUROPEAN PATENT SPECIFICATION**

(45) Date of publication of patent specification: **24.09.86**

(21) Application number: **82850174.2**

(22) Date of filing: **27.08.82**

(51) Int. Cl.⁴: **B 31 B 17/64,** B 31 C 1/06

(54) Method and apparatus for manufacturing a container having an inner end closure.

(30) Priority: **08.09.81 SE 8105334**

(43) Date of publication of application:
**16.03.83 Bulletin 83/11**

(45) Publication of the grant of the patent:
**24.09.86 Bulletin 86/39**

(84) Designated Contracting States:
**AT BE CH DE FR GB IT LI LU NL**

(56) References cited:
**DE-A-1 454 953
DE-B-1 008 560
DE-B-1 163 130
DE-B-1 297 975
DE-C- 933 546
DE-C- 961 590
FR-A- 926 130
GB-A- 832 379
US-A-2 423 965
US-A-2 834 260**

(73) Proprietor: **Akerlund & Rausing Licens
Aktiebolag
Veddestavägen 7-9
S-175 62 Järfälla (SE)**

(72) Inventor: **Christensson, Od Wikar**
c/o Esselte Pac Aktiebolag Veddestavägen 7-9
**S-175 62 Järfälla (SE)**

(74) Representative: **Avellan-Hultman, Olle**
Avellan-Hultman Patentbyra AB P.O. Box 5366
**S-102 46 Stockholm 5 (SE)**

Courier Press, Leamington Spa, England.

## Description

The present invention relates to a method and an apparatus for manufacturing a can-like container comprising a sleeve formed jacket and an end closure at least at one end of said jacket, and in which at least one of the container jacket and the end closure is made of a material comprising a base layer of cardboard or a similar stiff material which does not absorb high frequency energy and a further layer located on the base layer and fabricated of a material which can absorb high frequency energy and at least one of the common surfaces of the jacket and the at least one end closure of the container to be manufactured comprises a weldable layer of a material which can be welded using high frequency current energy, and in which the end closure is introduced in the open end of the jacket and is secured by such high frequency welding.

The invention has been developed especially in connection to manufacture of containers having a body of cardboard or similar stiff material which at least at one surface is covered with a heat sealable layer, for instance a weldable plastic layer. It should, however, be noted that the invention is not restricted to this particular material but is useful for many different types of container materials and many different types and forms of containers.

In the following the invention will mainly be described with reference to can-like containers made of a material having cardboard as a support body, but it is to be understood that the invention is not limited to this special field of containers.

It has been suggested that can-like containers be manufactured by forming a cylindrical body or jacket of a plane blank, by punching out one or several end closures, by forming the end closure with an upwardly projecting flange extending round the end closure and by pressing the end closure into the open end of the jacket, whereupon the jacket end is widened to a conical form and the flange of the end closure is connected by means of welding to the inner surface of the cylindrical jacket by means of heated jaws. Since, however, the time for having the heat penetrate the cardboard material and provide the welding is rather long, the method is slow and thereby expensive.

A method and an apparatus for manufacture of containers of this type also is previously known, in which the end closure with the widened flange extending round the end closure is pressed down in the opened end of the jacket by means of a press piston, whereby the press piston cooperates with a welding tool having a corresponding surface, and whereby the press piston is given a predetermined pressure which is maintained until the weldable layers at the outside of the conical surface of the end closure and the inside of the jacket start taking a plastically flowing form. At this stage the press piston is descended a slight distance with substantially the same pressure as previously applied, whereupon the pressure is unloaded while the weld joint is allowed to become cool and stiff. The method is described in connection to high frequency and ultrasonic welding. The said final descending of the press piston preferably is made so far that the total thickness of the combined weld joint between the jacket and the end closure is about the same size as the thickness of one of the weldable layers.

For executing the high freqency welding it is necessary that the material of the cylindrical jacket and the end closure is especially designed and includes a material sbsorbing the high frequency energy. A material for this purpose may be formed with a supporting body of cardboard, and intermediate layer of aluminium and an outer layer of a weldable plastic material. Such material is rather expensive to manufacture, both depending on the difficulties of laminating the three layers of material together, and also since the high frequency absorbing layer, for instance the aluminium layer, is normally not supplied in such widths as the normal machine widths for manufacture of the supporting cardboard material. Consequently there is some waste material and therefore the triple laminated material is rather expensive.

In high frequency welding it is normally necessary that the weldable layers provide a smooth welding surface without such steps which may appear for instance when the container jacket is made of a plane blank which is formed to a tubular body by means of an overlap joint. Therefore there is generally a need that the longitudinal or axial joint is designed as some type of butt joint or in any other way so that the jacket gets a unitary thickness of material round the entire jacket tube. This may cause problems as concerns the manufacture, and even if the jacket is formed accordingly it may happen that small stepped landings appear which provide a slight leakage or a bad weld joint and a subsequent risk of leakage in the said stepped landings after the end closure has been welded to the landing.

The method also claims for a relatively high degree of accuracy both as concerns the thickness of material in the jacket and in the end closure and as concerns the adjustment of the press piston movement towards the carrier of the container jacket. An increase of the thickness of material and a too snug movement of the press piston to the jacket carrier gives a too thin weld joint. A reduced thickness of material and a too slight movement of the press piston to the jacket holder, in turn, gives an insufficient contact between the weldable layers of material, and in both cases there is a risk that leakage will appear.

A method and an apparatus for weld connecting a lid or end closure to a tubular container sleeve by means of high frequency energy is known from the D—A—27 47 711. The patent discloses a high frequency weld connection of a lid having an all around extending rim in a container end, whereby high frequency energy is applied over the entire lid rim surface and whereby at least some pressure is applied to the common weld area of the rim and the container over the entire surface of the lid rim.

Investigations made by the patentee during several years have proved that this type of high frequency welding is disadvantageous in several respects: there are problems in providing a gas proof and even liquid proof container since there may be gas pores in the weld through which gas may leak, the weld seal may in some cases be so weak that the connection between the lid and the container can be broken depending on pressure inside or outside of the container; softened or liquidized weld material may adhere to the welding tool or the carrier making it necessary to frequently interrupt the series of welding operations to clean the tool and carrier respectively.

According to the present invention the end closure is pressed into the open end of the container jacket by means of a press piston having an expandable press ring of curved convex shape in cross section which when expanded compresses only a part of the common weld surface of the end closure and the container jacket thereby providing three different weld material zones, viz. a bottom zone of inversed V-shape providing a strong bond between the end closure and the container jacket, a narrow intermediate zone providing a gas and liquid sealing area and an upper zone of V-shape for receiving excess of weld material pressed out from the intermediate sealing zone.

The method and the apparatus according to the invention are further characterized in that the expandable portion of press piston during a certain period of the welding time provides an resilient additional compressing of a slight portion round the entire weld joint, which resilient additional compressing is sufficient for overbridging possible stepped landings in the weldable material and for eliminating the risk that there is a too soft contact between the two weldable layers even in case of existing stepped landings of the material. The expandable portion of the press piston may be a solid or hollow ring of rubber, synthetic resin or any other material which can be brought to expand either that the ring is compressed in the axial direction so as to expand in the radial direction, or in that the ring is widened by being inflated or in any other way. The welding can be made while moving the press piston down in one stage or in two successive steps, whereby the movement of the last step is utilized for expanding the expandable ring or an equivalent part of the piston.

By using a thin and easily formable end closure foil problems are avoided like formation of wrinkles etc., which are easily formed when a thick and heavy piece of material is formed with an edge flange extending round the end closure. According to the method of the invention the jacket is placed in a high frequency welding tool, the end piece is pressed through a formation ring into the open end of the jacket and into contact with the end of the jacket and high frequency energy is supplied to the weld area, whereby the welding is made momentarily.

In the following the invention will be described more closely in connection to the accompanying drawings.

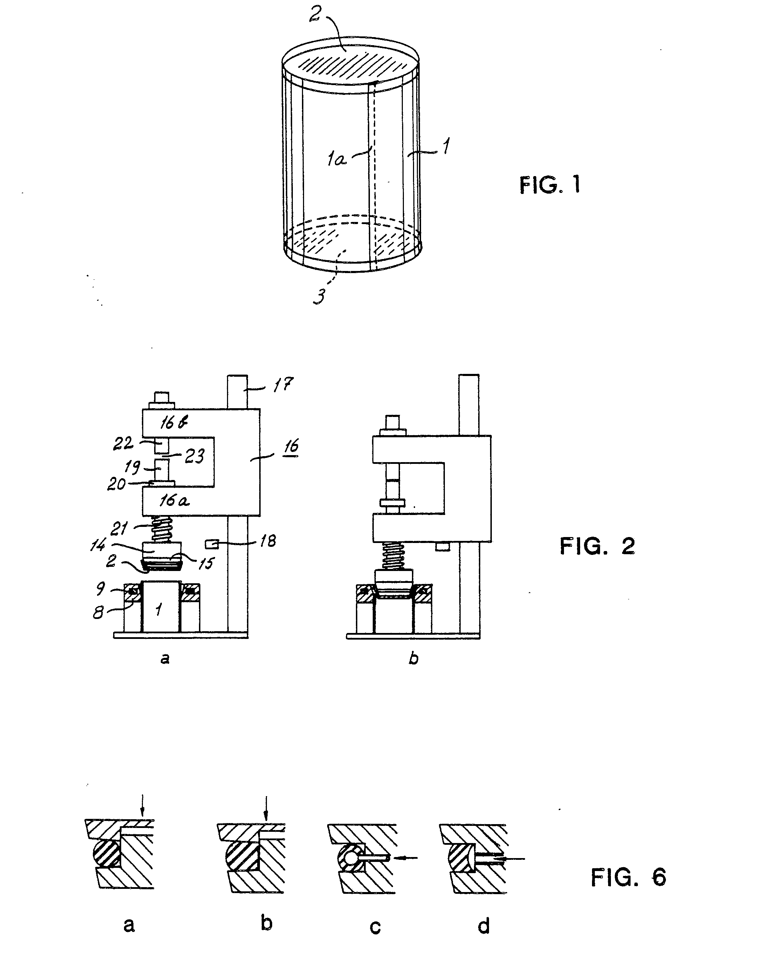

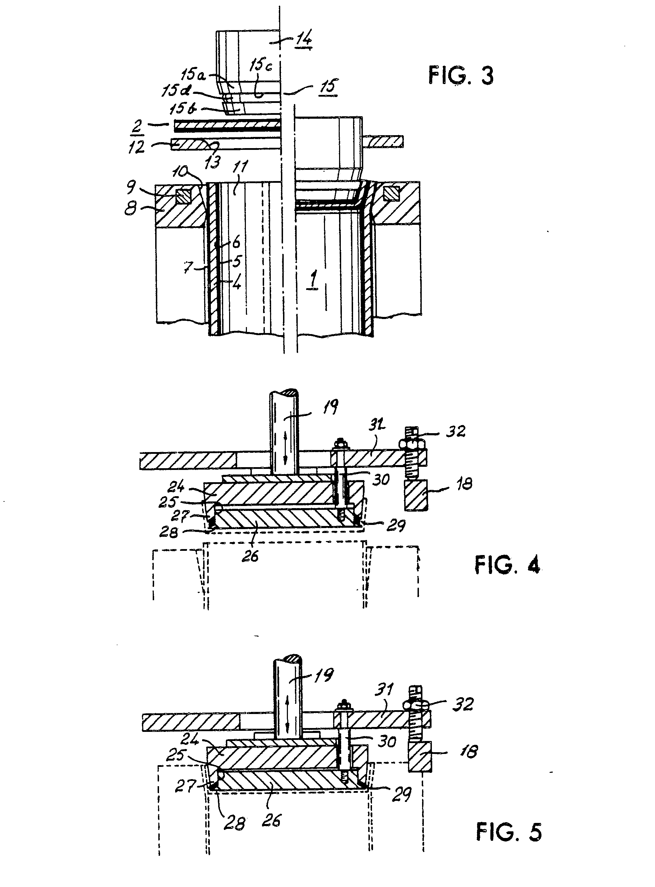

In the drawings figure 1 diagrammatically and in a perspective view shows a can-like container manufactured according to the method and the apparatus of the invention. Figure 2 diagrammatically illustrates two different stages in the manufacture of a can-like container by means of a simple apparatus according to the invention and figure 3 shows, in an enlarged scale, two different cross-section views of the apparatus of figure 2 while executing the method. Figure 4 shows an example of a part belonging to the apparatus according to the invention in a first stage of the welding operation, and figure 5 shows in a corresponding view a second stage of the welding operation and figure 6 diagrammatically illustrates some different alternative embodiments of an expandable means utilized in the press piston of the apparatus.

The container diagrammatically shown in figure 1 may be cylindrical but it may as well have any other cross-sectional form, preferably a form having rounded corners. The container comprises a sleeve formed body or jacket 1 which at the top is closed with a separate top closure 2 and at the bottom with a separate bottom closure 3. Both the jacket 1 and the top closure 2 and the bottom closure 3 can be made by being punched out from a plane container blank which at least at the side intended to be the inner side of the container is formed with a weldable layer. A well suited material is a composite material comprising, as illustrated in figure 3, a support material 4 of cardboard, an inner weldable layer 5 of synthetic resin, for instance polyethylene, and an intermediate layer 6 of metal, for instance a thin aluminium foil. Preferably the composite material is also at the side to become the outer side of the container laminated with a protecting plastic layer 7. Other possible materials are different kinds of sheet metal which at least at the side to become the inner side of the container has a layer of plastic or any other layer which can be welded by means of high frequency energy.

The container is made in that a jacket blank is punched out and is formed to a jacket sleeve which is open at least at one end. The forming of the jacket blank to a sleeve formed jacket preferably is made by a joint 1a extending in the longitudinal direction of the container, but it also can be made by spiral winding of a plane container blank and cutting the spiral-wound tube to the intended size. Separately a plane top closure 2 and/of bottom closure 3 is punched out, the jacket is mounted in a holder or ring 8, which in the embodiment illustrated in figure 3 is a high frequency weld ring of electrically insulating material having an inner annular electrical conduit 9. The weld ring 8 is formed with an entering cone edge 10 against which the upper end 11 of the jacket is pressed during the welding, and an exit cone edge providing a clearance surface for the ring. The top closure 2 is placed with the weldable material layer 5 downwards facing the jacket on top of the formation ring 12 provided on a slight distance above the weld ring 8. The formation ring 12 is formed with a through hole 13 having a rounded upper edge. The through hole 13 is adapted to the inner form and size of the jacket and to the thickness of material of the top closure 2. Above the formation ring there is a vertical reciprocatable press piston which when moving downwards pushes the top closure 2 through the formaton ring 12, whereby the top closure is formed with upwards projecting peripheral edges engaging the cone surface 15 of the press piston. At continued displacement downwards the peripheral edge of the top closure is pressed to the cone edge of the weld ring 12. When high frequency current is let through the conduit 9 the current passes through the outer plastic layer 7 and the support material 4 and is reflected against the aluminium foil 6 thereby providing heat, so that the weldable layers 5 of the jacket 1 and the top closure 2 of the bottom closure 3 respectively melt together. The welding time and the welding energy is adjusted as known to the expert.

In order to get a safety that a tight joint is obtained and that no creap leakages will appear, for instance at the places where the jacket has an overlap joint with a step, or if the top closure should have some slight wrinkle or fold, the press piston is prerably formed separated, so that the surface 15 is divided in an upper piston portion 15a and a lower piston portion 15b and between the said cone portions there is a slit 15c in which an expandable means, for instance an expandable rubber ring or similar means can be mounted. It is of importance that the expandable means is provided and formed so as to be located inside the surface 15 in the non-expanded state, whereas in the expanded state it projects at least a slight distance outside the surface 15.

As mentioned above the press piston forces the top closure or the bottom closure through the formation ring 12 and into the open end 11 of the jacket, whereby the said jacket end may be widened outwards and pressed to the edge by the weld ring 8. The pressure is adjusted so that the weldable layers are forced to each other by a predetermined pressure, and preferably the press piston is designed to that the piston can be allowed to move a slight distance downwards with the upper part thereof when the high frequency current is let into the conduit 9 and the two weldable layers melt. By the slight displacement downwards of the upper part of the press piston the two weldable layers are pressed together.

Just before the current is let into the conduit 9 or at the same time therewith the expandable means 15d is expanded. Preferably the height of the expandable means 15d is less than the height of the weld, whereby a central portion of the weld is pressed with a greater pressure than the remaining portions, what gives a safety that no creap leakages appear in the weld joint.

The method is diagrammatically illustrated in figures 2a and 2b. The two figures show a press tool comprising a tool slide 16 which is movable on a column 17 from the upper position shown in figure 2a to the press position shown in figure 2b. The length of the moment is determined by an adjustable stop pin 18. The tool slide 16 has two extending arms 16a and 16b provided on some distance above each other. The lower arm 16a displaceably carries the press piston 14 on a shaft 19. The movement downwards of the press piston 14 in relation to the tool slide 16 is defined by a shoulder 20 on the shaft 19. Between the press piston 14 and the bottom side of the tool arm 16a there is a pressure spring 21 tending to move the press piston 14 downwards to its bottom position. The upper tool arm 16b carries an adjustable pin 22 which is mounted to provide a gap 23 to the end of the piston shaft 19, which gap corresponds to the possibility for the press piston 14 to move downwards during the welding operation.

In figure 4 there is shown a detail of an embodiment of the means for expanding the expandable means. In this case the press piston is formed with an upper piston part 24 which in an inner chamber 25 displaceably receives a cone slide 26. The piston part 24 and the cone slide 26 are formed with radial collars 27 and 28 which together with the outer surface of the cone slide provides a cavity in which an expandable ring is mounted. The cone slide 26 is fixed mounted to a contact bar 31 by means of a pin 30. The contact bar 31 co-operates with the fixed stop pin 18. The upper piston part 24 which is connected to the shaft 19 is displaceable in relation to the pin 30. In the non-active state the ring 29 is retracted to a position inside the cone surface, and when moving the piston part 24 downwards the said piston part together with the top closure and the bottom closure can without obstacles be moved into the jacket end 11. When the contact bar 31, which is adjustable by means of the screw 32, engages the stop pin 18 the movement downwards of the cone slide 26 is stopped, but the piston part 24 still can be moved a further slight distance down towards the cone slide, whereby the rubber ring 29 is compressed axially and thereby expands radially. The rubber ring 29 accordingly elastically presses a part of the weld surfaces together during the welding operation.

Figure 5 diagrammatically and in an exaggerated view shows the apparatus during the welding with the rubber ring 29 expanded.

The rubber ring 29 can be loosely inserted in the cavity or it can be vulcanized to the collars 27 and 28.

In figure there are shown some alternative forms of the expandable means. In figures 6a and 6b there are shown two solid rubber rings of different cross-sections, in figure 6c there is shown a tubular ring which by means of compressed air or in any other way can be pumped up to an extended condition, and figure 6d diagrammatically shows a ring which can be brought to expand by means of air introduced from behind the ring.

It should be noted that in many cases it is necessary to bevel those surfaces of the piston part 24 and the cone slide 26 which provide the expansion of the elastical ring 29. If the said surfaces are parallel or converge conically in the direction outwards the elastic ring can be locked in the groove or even be pulled into the groove so that no expansion is obtained. On the contrary the said surfaces should be at least slightly conically widened in the direction radially outwards in relation to each other as indicated in figure 6a and 6b.

The heat from the welding place is removed very quickly, and already after one or a few seconds a quite satisfactory joint has been obtained and the ready made container can be pushed or pulled out of the welding tool. This does not involve any difficulties thanks to the relatively slight cone angle of the press cone and the welding tool. When pressing or pulling the container out of the tool the jacket is reformed completely or partly so that a can-like container having substantially straight sides without bottom or top cone is obtained.

When the welding is completed and the piston is retracted the expandable means 29 is contracted so as to allow a non-preventive retraction of the piston from the container top. As mentioned it is of importance that the rubber ring in the non-loaded state is positioned retracted from the outer piston surface, since in other case the piston sticks to the closure or can only with difficulties can be retracted therefrom.

It is to be understood that the above specification and the embodiments of the invention illustrated in the drawings are only illustrating examples and that may modifications may be presented within the scope of the appended claims.

Method and apparatus for manufacturing a container having an inner end closure.

1   container body, jacket
2   top closure
3   bottom closure
4   support material
5   inner weldable layer
6   intermediate metal layer
7   outer plastic layer
8   holder, ring, weld
9   electrical conduit
10   cone edge, entering
11   upper edge (of 1)
12   formation ring
13   through hole (of 12)
14   press piston
15   cone surface
15a   upper cone portion
15b   lower cone portion
15c   slit
15d   expandable means

16   tool slide (+16a, +16b)
17   column
18   stop pin
19   shaft
20   shoulder (of 19)
21   pressure spring
22   pin
23   gap
24   upper piston part
25   inner chamber (of 24)
26   cone slide
27   collar (of 24)
28   collar (of 26)
29   expandable ring
30   pin
31   contact bar
32   screw

## Claims

1. Method for manufacturing a can-like container comprising a sleeve formed jacket (1) and an end closure (2, 3) at least at one end of said jacket and in which at least one of the container jacket (1) and the end closure (2, 3) is made of a material comprising a base layer (4) of cardboard material or a similar stiff material which does not absorb high frequency energy and a further layer located on the base layer (4) and fabricated of a material which can absorb high frequency energy and at least one of the common surfaces of the jacket (1) and the at least one end closure (2, 3) of the container to be manufactured comprises a weldable layer (5) of a material which can be-welded using high frequency current energy, characterized by

making said container jacket (1) out of a planar punched blank which is formed into the container jacket (1);

placing said container jacket in a jacket carrier (8) which supports the jacket at least adjacent the open end thereof;

making said end closure (2, 3) out of a planar punched blank which is formed into a cup formed end closure having a planar bottom and, extending from said bottom, an upwardly projecting closure rim extending round the end closure, said end closure being formed from said planar punched blank by being pressed through a formation ring (12) to form said end closure into a cup form shape having a planar bottom of a size which is the same as or slightly smaller than the internal cross section of the open end of said container jacket (1);

pressing the end closure (2, 3) down into an end of the container jacket (1) by means of a press piston (14) to form a common surface between the jacket and the end closure rim;

resiliently compressing a part of the height of the common surface between the jacket (1) and the end closure rim at a location intermediate the extremities of said common surface with a greater pressure than the remaining parts, while maintaining the end closure (2, 3) and the jacket (1) axially motionless in relation to each other, by expanding an expandable press ring (15; 29), having a curved convex shape in cross section for contacting the end closure rim and forming a part of the press piston (14) when the latter is in the pressed down position thereof so as to press the end closure rim and corresponding jacket portion into engagement with each other over said part of the height of said common surface;

applying high frequency current across the common surface between the jacket portion and the end closure rim until the at least one weldable layer is melted while maintaining the pressure on said part of the height of the common surface between the jacket and the end closure rim;

cutting off the high frequency current;

allowing the weld to solidify;

and retracting the expandable press ring (15d; 29) and moving the press piston (14) out of the sealed and closed container end.

2. Method according to claim 1, characterized in that the end closure (2, 3) is pressed through the formation ring (12) by the press piston (14) in direct connection to the introduction of the end closure in the open end of the container jacket (1).

3. Method according to claim 1, in which the expandable means is a rubber ring (15d; 29), characterized in that the rubber ring (15d; 29) is brought to expand radially outwards by being compressed in the axial direction.

4. Method according to claim 1, in which the expandable means is a hollow tube, characterized in that the tube is brought to expand in the radial direction by being inflated by compressed air or similar means.

5. Apparatus for executing the method according to any of the preceding claims in manufacturing and closing a can-like container comprising a sleeve formed container jacket (1) and a cup formed end closure (2, 3) for at least one end of the jacket (1), in which at least one of the container jacket (1) and the end closure (2, 3) is made of a composite material having a base of cardboard or a similar stiff material which material does not absorb high frequency current energy, and a further layer, located on the base and fabricated of a material which can absorb high frequency current energy, and in which at least one of the common surfaces of the jacket (1) and the end closure (2; 3) of the container to be manufactured comprises a weldable layer (5) of a material which can be welded by high frequency current energy, and in which the apparatus comprises means (8) for carrying and supporting at least a part of the jacket (1) adjacent an open end thereof and a press piston (14) for pressing an end closure part (2, 3) into said open end of the container jacket (1), characterized in that the apparatus comprises

means (12) for forming a planar punched blank of an end closure material into the cup formed end closure (2, 3) having a bottom of a size which is equal to or slightly less than the internal cross section of the jacket (1), and an upwardly projecting end closure rim extending from said bottom around the end closure, and which means includes a formation ring (12) through which the planar punched blank of end closure is pressed by the press piston (14) and which formation ring defines a central opening (13) which is equal to or slightly less than internal dimensions of the jacket (1);

means for moving the press piston (14) down and up, respectively, in relation to the jacket carrier (8);

and means (9) for transmitting high frequency current energy to the portion of said layer (5) which can absorb high freqency current energy which is positioned adjacent to the common surface between the jacket (1) and the end closure rim to provide welding together of the end closure (2; 3) and the jacket (1) while said end closure is maintained in a fixed position in relation to said jacket (1);

and in which the press piston (14) includes an expandable means (15d; 29) extending around the press piston which, in the non-expanded condition thereof, lies at or within the outer surface of the press piston, and which, in the expanded condition thereof, projects beyond the surface of the press piston, and in which the said expandable means (15; 29) comprises an expandable ring having a surface of convex curved shape in cross section and of a height such that the end closure rim is contacted by the expandable ring (15d; 29), in the expanded condition thereof, at a position intermediate the extremities of the common surface between the closure rim and the jacket (1);

and means for providing expansion of the expandable ring of said expandable means over an area whose width is less than the height of the common surface between the end closure rim and the jacket (1) so as to contact the end closure rim at said position intermediate the extremities of the common surface.

6. Apparatus according to claim 5, characterized in that the expandable means is a ring of rubber or a similar material, the axial dimension of which is less than that of the press surface (15) of the press piston.

7. Apparatus according to claim 5 or 6, characterized in that the press surface (15) of the press piston is axially split (24, 26), defining a recess between the two split parts, in which recess a ring of rubber (29) or a similar material is mounted, and in that the said two split parts (24, 26) are designed for being axially moved in relation to each other, thereby compressing and releasing resp. the rubber ring (29) in the axial direction, so that the rubber ring (29) is expanded to project outside the press surface and is released, resp., to be located inside said press surface.

8. Apparatus according to claim 5 or 6, characterized in that the press surface (15) of the press piston is formed with an all around extending groove in which an inflatable rubber tube is introduced, which when being inflated is adapted to expand to a position outside the said press surface.

9. Apparatus according to claim 5 or 6, characterized in that the press surface (15) of the press piston is formed with an all around extending groove in which a rubber ring (29) is mounted, and in that the press surface is connected to a source of pressure medium for providing a pressure radially inside of the rubber ring to have the ring expand radially outwards.

10. Apparatus according to claim 5, characterized in that the formation ring (12) is mounted in the working area of the press piston (14) and in the vicinity of the jacket carrier (8).

## Revendications

1. Procédé pour fabriquer un récipient analogue à une boîte comprenant une enveloppe (1) en forme de manchon et une fermeture extrême (2, 3) à au moins une extrémité de ladite enveloppe, et dans lequel au moins l'une de l'envelope (1) du récipient et de la fermeture extrême (2, 3) est réalisée en une matière comprenant une couche de base (4) en carton ou en une matière rigide similaire qui n'absorbe pas l'énergie à haute fréquence et une autre couche située sur la couche de base (4) et réalisée en une matière qui peut absorber de l'énergie à haute fréquence, et au moins l'une des surfaces communes de l'enveloppe (1) et de ladite fermeture extrême (2, 3) du récipient à réaliser comprend une couche soudable (5) en une matière qui peut être soudée à l'aide d'une énergie de courant à haute fréquence, caractérisé en ce qu'il consiste à

réaliser ladite enveloppe (1) du récipient dans un flan découpé plan qui est mis sous la forme de l'enveloppe (1) du récipient;

à placer ladite enveloppe du récipient dans un porte-enveloppe (8) qui supporte l'enveloppe au moins à proximité immédiate de son extrémité ouverte;

à réaliser ladite fermeture extrême (2, 3) dans un flan découpé plan qui est mis sous la forme d'une fermeture extrême en forme de coupelle comportant un fond plan et, partant dudit fond, un rebord de fermeture faisant saillie vers le haut et s'etandant sur le pourtour de la fermeture extrême, ladite fermeture extrême étant formée à partir dudit flan découpé plan en étant pressée à travers un anneau (12) de mise en forme pour façonner ladite fermeture extrême en une forme de coupelle comportant un fond plan dont la dimension est égale ou légèrement inférieure à la section transversale intéieure de l'extrémité ouverte de ladite enveloppe (1) du récipient;

à presser la fermeture extrême (2, 3) pour la faire descendre dans une extrémité ouverte de l'enveloppe (1) du récipient au moyen d'un piston (14) de pressage afin de former une surface commune entre l'enveloppe et le rebord de la fermeture extrême;

à comprimer élastiquement une partie de la hauteur de la surface commune entre l'enveloppe (1) et le rebord de la fermeture extrême, en un emplacement situé entre les extrémités de ladite surface commune, sous une pression supérieure à celle des parties restantes, tout en maintenant la fermeture extrême (2, 3) et l'enveloppe (1) axialement sans mouvement l'une par rapport à l'autre, en expansant un anneau expansible (15d; 29) de pressage, présentant, en section transversale, une forme incurvée convexe destiné à entrer en contact avec le rebord de la fermeture extrême, et formant une partie du piston (14) de pressage lorsque ce dernier est dans sa position pressée vers le bas afin de presser le rebord de la fermeture extrême et la partie correspondante de l'enveloppe en prise l'un avec l'autre sur ladite partie de la hauteur de ladite surface commune;

à appliquer un courant à haute fréquence à travers la surface commune entre la partie d'enveloppe et le rebord de la fermeture extrême jusqu'à ce que la couche soudable fonde, tout en maintenant la pression sur ladite partie de la hauteur de la surface commune entre l'enveloppe et le rebord de la fermeture extrême;

à couper le courant à haute fréquence;

à permettrte à la soudure de se solidifier;

et à rétracter l'anneau expansible de pressage (15d; 29) et faire sortir le piston (14) de pressage de l'extrémité scellée et fermée du récipient.

2. Procédé selon la revendication 1, caractérisé en ce que la fermeture extrême (2, 3) est pressée à travers l'anneau (12) de façonnage par le piston (14) de pressage en liaison directe avec l'introduction de la fermeture extrême dans l'extrémité ouverte de l'enveloppe (1) du récipient.

3. Procédé selon la revendication 1, dans lequel les moyens expansibles comprennent un anneau de caoutchouc (15d; 29), caractérisé en ce que l'expansion radiale vers l'extérieur de l anneau de caoutchouc (15d; 29) est produite par une compression axiale de cet anneau.

4. Procédé selon la revendication 1, dans lequel les moyens expansibles comprennent un tube, caractérisé en ce que le tube est soumis à une expansion dans la direction radiale en étant gonflé par de l'air comprimé ou des moyens similaires.

5. Appareil pour la mise en oeuvre du procédé selon l'une quelconque des revendications précédentes dans le fabrication et la fermeture d'un récipient analogue à une boîte, comprenant une enveloppe (1) de récipient en forme de manchon et une fermeture extrême (2, 3) en forme de coupelle destinée à au moins une extrémité de l'enveloppe (1), dans lequel au moins l'une de l'enveloppe (1) du récipient et de la fermeture extrême (2, 3) est réalisée en une matière composite comportant une base de carton ou de matière rigide similaire, laquelle matière n'absorbe pas l'énergie d'un courant à haute fréquence, et une autre couche, située sur la base et réalisée en une matière qui peut absorber l'énergie d'un courant à haute fréquence, et dans lequel au moins l'une des surfaces communes de l'enveloppe (1) et de la fermeture extrême (2; 3) du rècipient à fabriquer comprend une couche soudable (5) en une matière qui peut être soudée par l'energie d'un courant à haute fréquence et dans lequel l'appareil comprend des moyens (8) destinés à porter et supporter au moins une partie de l'enveloppe (1) à proximité immédiate d'une extrémité ouverte de celle-ci, et un piston (14) de pressage destiné à presser une partie de fermeture extrême (2, 3) dans ladite extrémité ouverte de l'enveloppe (1) du récipient, caractérise en ce que l'appareil comprend

des moyens (12) destinés à mettre en forme un flan découpé plan, en une matière pour fermeture extrême, pour façonner la fermeture extrême (2, 3) en forme de coupelle comportant un fond ayant une dimension ágale ou légèrement inférieure à la section transversale intérieure de l'enveloppe (1), et un rebord de fermeture extrême faisant saille vers le haut à partir dudit fond, sur le pourtour de la fermeture extrême, lesquels moyens comprennent un anneau (12) de mise en forme à travers lequel le flan découpé plan de la fermeture extrême est pressé par le piston (14) de pressage, lequel anneau de mise en forme présente une ouverture centrale (13) que est égale ou légèrement inférieure aux dimensions intérieures de l'enveloppe (1);

des moyens destinés à faire monter et descendre, respectivement, le piston (14) de pressage par rapport au porte-enveloppe (8);

et des moyens (9) destinés à transmettre l'énergie d'uncourant à haute fréquence à la partie de ladite couche (5) qui peut absorber l'energie d'un courant à haute fréquence, qui est positionnée à proximité immédiate de la surface commune entre l'enveloppe (1) et le rebord de la fermeture extrême, pour réaliser un soudage entre la fermeture extrême (2; 3) et l'enveloppe (1), alors que ladite fermeture extrême est maintenue dans une position fixe par rapport à ladite enveloppe (1);

et dans lequel le piston (14) de pressage comprend des moyens expansibles (15d; 29) s'étendant sur le pourtour du piston de pressage et qui, dans leur état non expansé, s'étendent à ou à l'intérieur de la surface extérieure du piston de pressage et qui, dans leur état expansé, dépassent de la surface du piston de pressage, lesdits moyens expansibles (15d; 29) comprenant un anneau expansible présentant une surface ayant, en section transversale, une forme incurvée convexe et une hauteur telle que l'anneau expansible (15d; 29), dans son état expansé, entre en contact avec le rehord de la fermeture extrème, en une position située entre les extrémités de la surface commune entre le rebord de la fermeture et l'enveloppe (1);

et des moyens destinés à produire une expansion de l'anneau expansible desdits moyens expansibles sur une zone dont la largeur est inférieure à la hauteur de la surface commune entre le rebord de la fermeture extrême et l'enveloppe (1) afin d'entrer en contact avec le rebord de la fermeture extrême dans l'adite position située entre les extrémités de la surface commune.

6. Appareil selon la revendication 5, caractérisé en ce que les moyens expansibles comprennent un anneau de caoutchouc d'une matière similaire, dont la dimension axiale est inférieure à celle de la surface (15) de pressage du piston de pressage.

7. Appareil selon la revendication 5 ou 6, caractérisé en ce que la surface (15) de pressage du piston de pressage est fendue axialement (24, 26), définissant un évidement entre les deux parties fendues, évidement dans lequel un anneau (29) de caoutchouc et d'une matière similaire est monté, et en ce que lesdites deux parties fendues (24, 26) sont conçues pour être déplacées axialement l'une par rapport à l'autre, afin de comprimer et de relâcher, respectivement, l'anneau (29) de caoutchouc dans la direction axiale pour que l'anneau (29) de caoutchouc soit expansé afin de dépasser à l'extérieur de la surface de pressage et qu'il soit relâche, respectivement, pour être placé à l'intérieur de ladite surface de pressage.

8. Appareil selon la revendication 5 ou 6, caractérisé en ce que la surface (15) de pressage du piston de pressage présente une gorge s'étendant sur tout son pourtour et dans laquelle est introduit un tube de caoutchouc gonflable qui, lorsqu'il est gonflé, est conçu pour s'expanser jusqu'à une position extérieure à ladite surface de pressage.

9. Appareil selon la revendication 5 ou 6, caractérisé en ce que la surface (15) de pressage du piston de pressage présente une gorge s'étendant sur tout son pourtour et dans laquelle est monté un anneau (29) de caoutchouc, et en ce que la surface de pressage est reliée à une source d'un milieu sous pression afin d'appliquer une pression radialement à l'intérieur de l'anneau de caoutchouc pour provoquer l'expansion de l'anneau radialement vers l'extérieur.

10. Appareil selon la revendication 5, caractérisé en ce que l'anneau (12) de façonnage est monté dans la zone de travail du piston (14) de pressage et à proximité du porte-enveloppe (8).

**Patentansprüche**

1. Verfahren zur Herstellung eines dosenförmigen Behälters, der einen hülsenförmigen Mantel (1) un einen Endverschluß (2, 3) an wenigstens einem Ende des Mantels aufweist, wobei der Behältermantel (1) und/oder der Endverschluß (2, 3) aus einem Material hergestellt ist, das eine Basisschicht (4) aus Karton oder einem ähnlich steifen und Hochfrequenzener nicht absorbierenden Material und eine auf der Basisschicht (4) angeordnete Schicht aus einem zur Absorption von Hochfrequenzenergie geeigneten Material enthält, und wohei wenigstens eine der gemeinsamen Flächen des Mantels (1) und des wenigstens einen Endverschlusses (2, 3) des herzustellenden Behälters eine schweißbare Schicht (5) aus einem zum Schweißen durch Hochfrequenzenergie geeigneten Material aufweist, gekennzeichnet durch

Herstellen des Behältermantels (1) aus einem planaren gestanzten Zuschnitt, der zu dem Behältermantel (1) verformt wird;

Einsetzen des Behältermantels in einen Mantelhalter (8), der den Mantel wenigstens an dessen offenen Ende abstützt;

Herstellen des Endverschlusses (2, 3) aus einem planaren ausgestanzten Zuschnitt, der napfförmig mit einem planaren Boden und einem von dem Boden aus nach oben vorspringenden umlaufenden Rand ausgebildet wird, wobei genannter Endverschluß aus dem planaren gestanzten Zuschnitt unter Durchdrücken durch einen Formring (12) verformt wird, um genanntem Endverschluß eine Napfform mit einem Boden zugeben, dessen Große gleich oder etwas kleiner als der innere Querschnitt des offenen Endes des Behältermantels (1) ist;

Drücken des Endverschlusses (2, 3) nach unten in ein offenes Ende des Behältermantels (1) mittels eines Druckkolbens (14), um eine gemeinsame Fläche zwischen dem Mantel und dem Endverschlußrand zu bilden;

elastisches Zusammendrücken eines Höhenabschnitts der gemeinsamen Flächen zwischen dem Mantel (1) und dem Endverschlußrand an einer Stelle zwischen den Extremstellen der gemeinsamen Fläche mit einem höheren Druck als die restlichen Teile der gemeinsamen Fläche, unter Aufrechterhaltung der axialen Relativstellung des Endverschlusses (2, 3) und des Mantels (1), durch Aufweiten eines expandierbaren Druckrings (15d; 29), der eine konvex gekrümmte Querschnittsform für den Angriff am Endverschluß hat und einen Teil des Druckkolbens (14) bildet, wenn letzterer in seiner niedergedrückten Position ist, so daß der Endverschlußrand und der entsprechende Mantelabschnitt über den Höhenanbschnitt der gemeinsamen Oberfläche in gegenseitige Anlage gedrückt werden;

Anlegen von Hochfrequenzstrom an die gemeinsame Fläche zwischen dem Mantelabschnitt und dem Endverschußrand solange, bis wenigstens wine schweißbare Schicht geschmolzen ist, wobei der Druck auf genannten Höhenabschnitt der gemeinsamen Flâche zwischen dem Mantel und dem Endverschlußrand aufrechterhalten wird;

Unterbrechen des Hochfrequenzstromes;

Verfestigenlassen der Schweißnaht; und

Einziehen des expandierbaren Druckrings (15d; 29) und Bewegen des Druckkolbens (14) aus dèm versiegelten und geschlossenen Behälterende.

2. Verfahren nach Anspruch 1, dadurch gekennzeichnet, daß der Endverschluß (2, 3) von dem Druckkolben (14), in direkter Verbindung mit dem Eínführen des Endverschlusses in des offene Ende des Behältermantels (1) durch den Formring (12) gedrückt wird.

3. Verfahren nach Anspruch 1, wobei das expandierbare Mittel ein Gummiring (15d; 20) ist, dadurch gekennzeichnet, daß der Gummiring (15d; 29) durch Druckbeaufschlagung in Axialrichtung radial auswärts aufgeweitet wird.

4. Verfahren nach Anspruch 1, wobei das expandierbare Mittel ein hohler Schlauch ist, dadurch gekennzeichnet, daß der Schlauch in radialer Richtung dadurch aufgeweitettr wird, daß er durch Druckluft oder ähnliche aufgeblasen wird.

5. Apparat zur Ausführung des Verfahrens nach einem der vorhergegenden Ansprüche beim Herstellen und Verschließen eines dosenförmigen Behälters der einen hülsenförmigen Mantel (1) und einen Endverschluß (2, 3) für wenigstens ein Ende des Mantels (1) aufweist, wobei der Behältermantel (1) und/oder der Endverschluß (2, 3) aus einem zusammengesetzten Material hergestellt ist, das eine Basis aus Karton oder einem ähnlich steifen und Hochfrequenzenergie nicht absorbierenden Material und eine auf der Basis angeordnete weitere Schicht aus weinem zur Absorption von Hochfrequenzenergie geeigneten Material aufweist, und wobei wenigstens eine der gemeinsamen Flächen des Mantels (1) und des Endverschlusses (2; 3) des herzustellenden Behälters eine schweißbare Schicht (5) aus einem zum Schweißen durch Hochfrequenzenergie geeigneten Material aufweist, und wobei der Apparat Mittel zur Halterung und zum Abstützen wenigstens eines Teils des Mantels (1) an dessen offenen Ende und einen Druckkolben (14) zum Eindrücken eines Endverschlußteils (2, 3) in das offene Ende des Behältermantels (1) aufweist, dadurch gekennzeichnet, daß der Apparat aufweist

Mittel (12) zum Verformen eines planaren ausgestanzten Zuschnitts aus einem Endverschlußmaterial zu dem napfförmigen Endverschluß (2, 3) mit einem Boden einer Größe, die gleich oder etwas kleiner als der Innenquerschnitt des Mantels (1) ist, und einem vom Boden aus nach oben vorspringenden umlaufenden Rand, wobei das Mittel einen Formring (12) aufweist, durch der planare ausgestanzte Zuschnitt des Endverschlusses mittels des Druckkolbens (14) durchgedrückt wird und der eine zentrale Öffnung (13) definiert, die gleich oder etwas kleiner als die Innenabmessung des Mantels (1) ist;

Mittel zum Abwärts bzw. Aufwärts bewegen des Druckkolbens (14) relativ zum Mantelhalter (8);

und Mittel (9) zum Übertragen von Hochfrequenzenergie zu dem Abschnitt der Hochfrequenzenergie absorbierenden Schicht (5), der an der gemeinsamen Fläche zwischen dem Mantel (1) und dem Endverschlußrand liegt, um den Endverschluß (2; 3) und den Mantel (1) miteinander zu verschweißen, während der Endverschluß relativ zum Mantel (1) in einer festen Position gehalten wird;

und wobei der Druckkolben (14) ein um den Fruckkolben umlaufendes expandierbares Mittel (15d; 29) aufwiest, dam im nicht-expandierten Zustand an oder innerhalb der Außenfläche des Druckkolbens liegt und im expandierten Zustand über diese Fläche des Drukkolbens vorsteht, und wobei das expandierbare Mittel (15d; 29) einen expandierbaren Ring aufweist, der eine konvex gekrümmte Querschnittsform und eine solche Höhe hat, daß er in dem expandierten Zustand an dem Endverschlßrand an einer Stelle zwischen den Extremstellen der gemeinsamen Fläche zwischen Verschlußrand un Mantel (1) zur Anlage kommt;

und Mittel zum Aufweiten des expandierbaren Rings des expandierbaren Mittels über einen Bereich, dessen Breite kleiner als die Höhe der gemeinsamen Fläche zwischen dem Endverschlußrand und dem Mantel (1) ist, so daß der expandierbare Ring an genannter Stelle zwischen den Extremstellen der gemeinsamen Fläche am Endverschlußrand in Anlage kommt.

6. Apparat nach Anspruch 5, dadurch gekennzeichnet, daß das expandierbare Mittel ein ring aus Gummi oder ähnlichem Material ist, dessen Axialabmessung kleiner als die Druckfläche (15) des Druckkolbens ist.

7. Apparat nach Anspruch 5 oder 6, dadurch gekennzeichnet, daß die Druckfläche (15) des Druckkolbens axial geteilt (24, 26) ist und eine Ausnehmung zwischen den beiden Teilen gebildet ist, in der ein Ring (29) aus Gummi oder einem ähnlichen Material angeordnet ist, und daß die beiden Teile (24, 26) zur relativen Axialbewegung geeignet ausgebildet sind, um den Gummiring (29) in Axialrichtung zu be- und entlasten, wodurch der Gummiring (29) unter Vorspringen nach außen über die Druckfläche hinaus expandiert bzw. entlastet wird, um sich in die Druckfläche zurückzuziehen.

8. Apparat nach Anspruch 5 oder 6, dadurch gekennzeichnet, daß die Druckfläche (15) des Druckkolbens mit einer umlaufenden Nut versehen ist, in der ein aufblasbarer Gummischlauch angeordnet ist, der nach dem Aufblasen in eine Position außerhalb der Druckfläche aufweitbar ist.

9. Apparat nach Anspruch 5 oder 6, dadurch gekennzeichnet, daß die Druckfläche (15) des Druckkolbens mit einer umlaufenden Nut versehen, in der ein Gummiring (29) angeordnet ist, und daß die Druckfläche mit einer Druckquelle verbunden ist, um an der radial innengelegenen Seite des Gummirings einen Druck aufzubauen, der den Ring radial nach außen expandieren läßt.

10. Apparat nach Anspruch 5, dadurch gekennzeichnet, daß der Formring (12) im Arbeitsbereich des Druckkolbens (14) und in der Nähe des Mantelhalters (8) angebracht ist.

FIG. 1

FIG. 2

FIG. 6

FIG. 3

FIG. 4

FIG. 5